# EUROPEAN PATENT SPECIFICATION

(11) **EP 2 596 286 B1**
(45) Date of publication and mention of the grant of the patent: **18.10.2017**
(21) Application number: 11774067.0
(22) Date of filing: 07.07.2011
(51) Int. Cl.: F22B 1/18, F28D 15/02, F28D 15/06, F28F 27/02, F28D 21/00

(54) **A METHOD AND A DEVICE FOR COOLING WOOD GASES**
VERFAHREN UND VORRICHTUNG ZUR KÜHLUNG VON HOLZGASEN
PROCÉDÉ ET DISPOSITIF PERMETTANT DE REFROIDIR DES GAZ DE BOIS

(30) Priority: 22.07.2010 FI 20105818
(43) Date of publication of application: 29.05.2013
(73) Proprietor: Volter Oy, 90450 Kempele (FI)
(72) Inventor: MIKKONEN, Vesa, FI-74595 Runni (FI)
(74) Representative: Berggren Oy, Tampere
(86) International application number: PCT/FI2011/050640
(87) International publication number: WO 2012/010742

(56) References cited:
- EP-A1- 0 013 580
- DE-A1-102004 030 368
- GB-A- 1 293 279
- GB-A- 2 115 129
- JP-A- 60 259 892

## Description

### Field of the invention

The present invention relates to a method for cooling wood gases, wherein wood gases are formed by burning wood material in a gasifier, and the wood gases are cooled in a cooler. The invention also relates to a device for cooling wood gases, comprising a cooler to which wood gases formed by burning of wood material in the gasifier are arranged to be led, for cooling the wood gases. Furthermore, the invention relates to a wood gas generator comprising a gasifier for forming wood gases by burning wood material, a cooler to which the wood gases formed by burning wood material in the gasifier are arranged to be led for cooling the wood gases, and a combustion engine, in which the wood gases are arranged to be used as a power source of the combustion engine.

### Background of the invention

Energy plants are known, in which both thermal energy and electrical energy is developed to be utilized, for example, for heating buildings and producing electricity for the needs of a building. For such combined heat and power plants, the abbreviation CHP plant can be used in English. In such plants, the aim is to increasingly utilize renewable energy sources, such as biofuels. Consequently, energy plants have been recently developed which operate, for example, with wood gas, and in which hot flue gases (wood gases) are developed by burning wood and are led to a combustion engine that rotates a generator for producing electricity. Furthermore, wood gases are used for heating, for example, liquid to be led into a district heating network.

In the burning of wood, fine particles are formed, which are entrained in the wood gases entering further process steps. For this reason, the wood gases should be filtered, to reduce the content of fine particles. However, a problem is that when, for example, cloth filters are applied, the temperature of the wood gases to be led into the filter must not be too high but it should be below 250°C.

Thus, controlling the cooling of the wood gases is a significant challenge in the gasification process. In tests that have been carried out, it has been found that commercially known heat exchangers have not turned out to be functional solutions in the utilization of wood gases. Problems have involved, for example, fast clogging of the heat exchangers, as well as the almost non-existent possibility of adjustment in practice. The temperature of the gas obtained from the gasifier is typically between 400 and 650°C. When a cloth filter is applied, the desired temperature of the gas upstream of the filter is 200 to 250°C. The temperature of the gas must not exceed 250°C, and on the other hand, the temperature should be sufficiently high so that no moisture is formed in the filter.

Various gas coolers are known, in which evaporating liquid is used for precooling combustion gas formed from solid fuels of organic origin, such as coal, to better remove impurities contained in the crude gas from the gas. One such cooler is presented in European application publication EP 0 013 580. In the solution presented in this document, hot gas formed from coal is cooled with an evaporator so that molten ash particles entrained in the gas can be removed after cooling steps. Here, the cooling is performed in three steps, first by using hot gas to evaporate water in a first vessel. After that, the steam formed in the first vessel is superheated in a second vessel. In the third step, the water to be evaporated in the first step is preheated. Application publication GB 2 115 129 also presents a similar device, in which the aim is to cool gas that contains particles. In many cases, coal, such as mineral coal, is used as fuel in these plants of prior art for generating steam or superheated steam. Thus, the temperature of the gas before the cooling is usually significantly higher than 650°C. For example, in said application publication GB 2 115 129, the gas temperature is in the range from 800 to 1400°C.

Application publication DE 102004030368 presents an arrangement for producing wood gas from wood chips. According to the document, the temperature of the wood gas should be very high, in the order of 700 to 1400°C, so that the tar content of the wood gas were as low as possible. This is achieved by leading the wood gases to a first heat exchanger for heating the wood chips to be forwarded to burning. After that, the wood gases are led to a second heat exchanger for lowering the temperature of the wood gases. In this second heat exchanger, heat is transferred to water, whereby the temperature of the water rises. However, in the solution according to this document, water is not evaporated.

Publication GB 1 293 279 A discloses a heat transfer apparatus for utilization of the heat content of exhaust gas. This apparatus comprises evaporating heat exchanger wherein the amount of intermediate liquid medium in the heat exchanging channels of an evaporating heat exchanger is adjusted in order to control the temperature of the heat receiving medium receiving heat from the intermediate medium.

### Brief summary of the invention

It is an aim of the present invention to eliminate the drawbacks of the prior art to a great extent, and to provide a heat exchanger for an energy plant operating by wood gases, wherein the temperature of the wood gases can be adjusted. The invention is based on the idea that a boiling heat exchanger is applied in the cooler for gases, wherein the temperature can be adjusted to a desired value by adjusting the amount of liquid in the cooling liquid channels inside the heat exchanger on the basis of the measurement of the temperature of the wood gases. According to an advantageous embodiment of the invention, this is achieved by adjusting the liquid level in the pipes containing cooling liquid.

To put it more precisely, the method according to the present invention is primarily characterized in
- applying a boiling heat exchanger as the cooler,
- cooling wood gases in the boiling heat exchanger which is equipped with liquid channels for cooling liquid, and
- adjusting the amount of cooling liquid in the liquid channels of the boiling heat exchanger.

The device for cooling wood gases according to the present invention is primarily characterized in that the cooler comprises a boiling heat exchanger equipped with liquid channels for cooling liquid, and that the device for cooling wood gases further comprises means for adjusting the amount of cooling liquid in the liquid channels of the boiling heat exchanger.

The wood gas generator according to the present invention is primarily characterized in that the cooler comprises a boiling heat exchanger equipped with liquid channels for cooling liquid, and that the wood gas generator further comprises means for adjusting the amount of cooling liquid in the liquid channels of the boiling heat exchanger.

Other advantageous embodiments are presented in the dependent claims.

The present invention shows remarkable advantages over solutions of prior art. The heat exchanger solution according to the invention enables a relatively easy adjustment of the temperature of wood gases, wherein the clogging of the filter used for filtering the wood gases can be avoided or at least restrained to a significant extent.

### Description of the drawings

In the following, the invention will be described in more detail with reference to the appended drawings, in which
- Fig. 1: shows an energy plant, in which the invention can be applied,
- Fig. 2: shows a wood gas generator according to an advantageous embodiment of the invention, and
- Fig. 3: shows a device for cooling wood gases to be used in a wood gas generator according to an advantageous embodiment of the invention.

### Detailed description of the invention

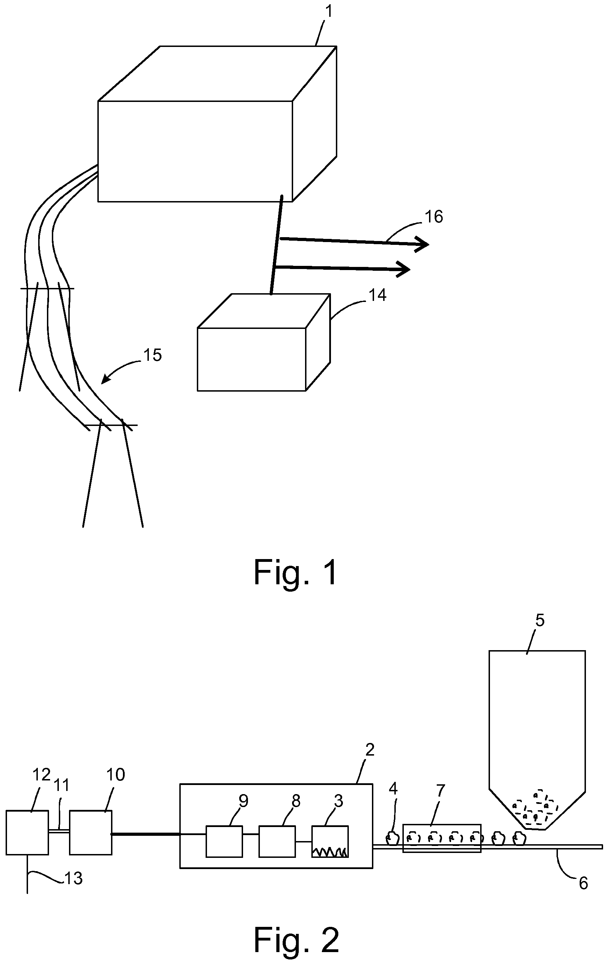

Figure 1 shows a reduced chart of an energy plant 1, in connection with which the solution according to the present invention can be applied; and Fig. 2 shows a wood gas generator according to an advantageous embodiment of the invention to be applied, for example, in the energy plant of Fig. 1.

The energy plant 1 preferably comprises a wood gas generator 2 with a gasifier 3, in which wood or other wood-based fuel 4 is burnt. By the combustion of the fuel, combustion gases are produced which can also be called wood gases in this context. The fuel 4 can be led from a fuel storage 5 to the gasifier 3 by means of, for example, a conveyor 6. The fuel 4 can be preheated in a preheater 7, or it can be led without preheating to the gasifier 3. The preheater 7 is powered, for example, by the wood gases formed by combustion, wherein the wood gases are led into the preheater. The preheater is thus used as a kind of a heat exchanger. As a result, the temperature of the wood gases may drop slightly already in the preheater 7.

Regardless of using the preheater 7 or not, a device for cooling wood gases is also needed, for example a cooler 8, in which the temperature of the wood gases is reduced to a sufficiently low level so that the wood gases can be led into a filter 9. In the filter 9, the aim is to take away fine particles formed by the combustion of the fuel, which particles may still be entrained in the wood gases leaving the heat exchanger 8.

From the filter 9, the wood gases can be led to a combustion engine 10, which is powered by the wood gases. The combustion engine 10 is equipped with a power take-off, such as a shaft 11, which is in a power transmitting connection with a generator 12. Thus, as a result of the rotational motion of the shaft 11, electrical energy is generated in the generator 12. This electrical energy can be led by means of cables 13, for example, directly to a consumption location 14 or to an electrical power network 15.

Heat produced in the energy plant can also be utilized, if necessary, for example for heating buildings, for example by heating a medium to be led into a district heating network 16.

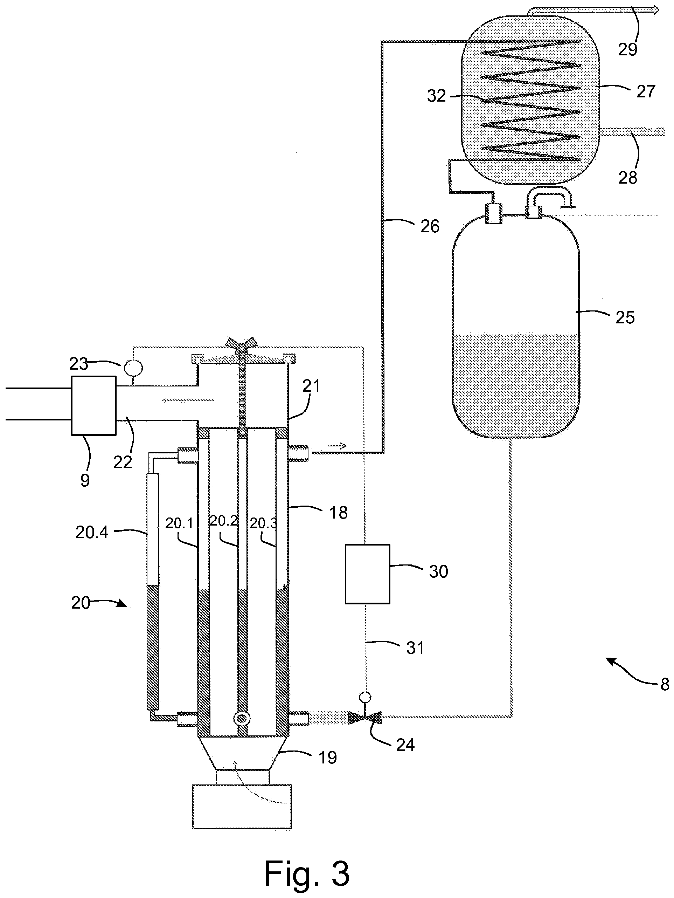

We shall next describe the operation of a device 8 for cooling wood gases according to an advantageous embodiment of the invention in more detail with reference to Fig. 3. Wood gases formed in the combustion of fuel are led along wood gas channels 17 via an inlet 19 into a boiling heat exchanger 18. The boiling heat exchanger 18 consists of a container made of, for example, stainless steel and containing cooling liquid channels 20 placed in its inner volume. In the present application, the boiling heat exchanger 18 refers to a heat exchanger in which the cooling medium is heated to boil, wherein the medium is evaporated.

The temperature of the wood gases in the inlet 19 of the boiling heat exchanger 18 may typically be in the order of 400 to 650°C. Via an outlet 21 of the boiling heat exchanger 18, the wood gases are led along channels 22 to further processing steps in the energy plant 1, for example to a filter 9. In the boiling heat exchanger 18, the temperature of the wood gases is to be reduced in such a way that the temperature of the wood gases in the outlet 21 is not higher than 250°C, preferably between 200 and 250°C. This is achieved advantageously as follows. A temperature sensor 23 is used for measuring the temperature of the wood gases coming via the outlet 21. If the temperature exceeds a first predetermined limit value, for example 250°C, a valve 24 is opened, wherein liquid can flow from a liquid tank 25 into the cooling liquid channels 20. As a result, the liquid level rises in the cooling liquid channels 20, wherein the amount of cooling liquid in that part of the cooling liquid channels 20 which is in contact with the wood gases, increases. As a result, the cooling capacity of the boiling heat exchanger 18 increases, and the temperature of the wood gases begins to drop.

The sensor 23 is connected, for example, to a control unit 30, which may be, for example, a computer, a process automation system or the like, examining the measurement signal given by the sensor 23 and utilizing it to determine if there is a need to change the cooling capacity. If there is a need to change the cooling capacity, the control unit 30 generates, for example, a control signal 31 to the valve 24, to effect a corresponding change in the position of the valve 24.

During the operation of the boiling heat exchanger 18, the liquid in the cooling liquid channels 20 boils, wherein the steam produced by boiling can be led via steam channels 26 to a condenser 27. Heating liquid, which is to be heated in the energy plant 1, is also led to the condenser 27. It should be mentioned that the steam entering via the steam channels 26 cannot be mixed with the heating liquid supplied to the condenser via the inlet 28, but the circulation is closed. The condenser 27 is thus used as a heat exchanger in which thermal energy contained in the steam is transferred to the liquid to be heated. The liquid heated in the condenser 27 can be led from the condenser via an outlet 29 e.g. to a district heating network 16 or directly to a consumption location, to be utilized for heating, for example, buildings 15 and/or so-called domestic hot water.

The steam cooled in the condenser 27 and condensed into a liquid on the walls of the condensing pipes 32 inside the condenser 27 can be led into a liquid tank 25. The condensing pipes 32 inside the condenser 27 are advantageously spiral, but also other shapes are feasible.

As a result of the above-described boiling (evaporation) of the liquid, the liquid level in the cooling liquid channels 20 may drop, so that by adjusting the valve 24 it is possible to keep the liquid level substantially constant in the cooling liquid channels 20 when there is no need to drop or raise the level to reduce or increase the cooling capacity (that is, the cooling of wood gases) of the boiling heat exchanger 18 (that is, to increase the cooling capacity of the wood gases).

If the temperature of the wood gases drops below a predetermined second limit value, the valve 24 can be adjusted in the closing direction or totally closed, wherein the cooling liquid level in the cooling liquid channels 20 begins to drop, as no new cooling liquid can flow into the cooling liquid channels 20 in place of the liquid removed from there by evaporation.

The above-presented adjustment of the temperature of the wood gases was thus based on measuring the temperature of wood gases leaving the boiling heat exchanger, but it is obvious that the measurement point can also be placed at another point where a temperature measurement gives a sufficiently reliable control for the adjustment, or there may also be several measurement points. It should also be mentioned that in some embodiments, no temperature measurement is needed, but the adjustment is based on the utilization of predetermined liquid level values. Thus, a guideline value may be known for the liquid level in the cooling liquid channels 20, to have a sufficiently low temperature of wood gases. Such predetermined values may have been determined for example experimentally. However, this arrangement is not necessarily as reliable as the adjustment based on temperature measurements.

The cooling liquid channels 20 preferably consist of several pipes 20.1 to 20.3 placed in the inner volume of the boiling heat exchanger 18. The material, number, cross-sectional form, and or diameter of the pipes may vary in different embodiments, for example according to the cooling capacity required. Moreover, the pipes do not necessarily need to be substantially vertical, but they may also be placed in an inclined position or in some embodiments even horizontally.

The pipes 20.1 to 20.3 of the cooling liquid channels 20 are arranged in a flow connection, on one hand, with a valve 24 for supplying cooling liquid into the pipes 201 to 20.3 and, on the other hand, with steam channels 26 for removing steam from the pipes 20.1 to 20.3.

In the wood gas generator of Fig. 3, the liquid tank 25 is placed higher than the cooling liquid channels 20 of the boiling heat exchanger 18. As a result, no external power source is needed for supplying cooling liquid from the liquid tank 25 to the cooling liquid channels 20 of the boiling heat exchanger 18, but the flow is implemented by means of gravity, when the valve 24 is at least partly open. In some embodiments, the liquid tank 25 can be placed at the same level or lower than the cooling liquid channels 20 of the boiling heat exchanger 18, wherein there may be a need to use a pump (not shown) or the like for conveying cooling liquid from the liquid tank 25 to the cooling liquid channels 20 of the boiling heat exchanger 18.

In the wood gas generator of Fig. 3, the cooling liquid channels 20 also comprise a cooling liquid channel 20.4 placed outside the boiling heat exchanger 18, which channel 20.4 may be at least partly transparent so that this cooling liquid channel 20.4 can be used, for example, for monitoring the cooling liquid level in the cooling liquid channels 20.

Various mixtures of liquids can be used in the boiling heat exchanger 18 for achieving a desired boiling point. If the 100°C boiling point of water is too low, it can be raised by means of, for example, a glycol mixture. Lowering the boiling can be implemented, for example, by adding ethanol, whose boiling point is about 78°C, to the cooling liquid circulation.

Consequently, one aim of the cooling device according to the invention is to lower the temperature of the wood gases from a range between 400 and 650°C to a range between 200 and 250°C, so that impurities contained in the gas can be filtered out before the gas is used as fuel in the combustion engine 10 rotating the generator 12.

The present invention is not limited to the above-presented embodiments, but it can be modified within the scope of the appended claims.

## Claims

1. A method for cooling wood gases, wherein wood gases are formed by burning wood material in a gasifier (3), and the wood gases are cooled in a cooler (8), **characterized in**
- applying a boiling heat exchanger (18) as the cooler (8),
- cooling the wood gases in the boiling heat exchanger (18) which is equipped with liquid channels (20) for cooling liquid,
- adjusting the amount of cooling liquid in the liquid channels (20) of the boiling heat exchanger, and
- thereby adjusting the temperature of the wood gases.

2. The method according to claim 1, **characterized in** adjusting the amount of cooling liquid in the liquid channels (20) by changing the cooling liquid level.

3. The method according to claim 2, **characterized in** increasing the cooling capacity of the cooler (8) by raising the cooling liquid level in the liquid channels (20), and in reducing the cooling capacity by lowering the cooling liquid level in the liquid channels (20).

4. The method according to claim 1, 2 or 3, **characterized in** evaporating the cooling liquid in the liquid channels (20) of the boiling heat exchanger (18), and leading the evaporated liquid into a condenser (27) for converting the evaporated cooling liquid to the liquid state.

5. The method according to claim 4, **characterized in** also conveying heating liquid into the condenser (27), wherein thermal energy contained in the evaporated cooling liquid is transferred to the heating liquid.

6. The method according to claim 5, **characterized in** utilizing the heating liquid for heating one or more buildings (15).

7. A device for cooling wood gases, comprising a cooler (8), into which wood gases formed by combustion of wood material in a gasifier are arranged to be led for cooling the wood gases, **characterized in that** the cooler (8) comprises a boiling heat exchanger (18) with liquid channels (20) for cooling liquid, and that the device for cooling wood gases also comprises means (24) for adjusting the amount of cooling liquid in the liquid channels (20) of the boiling heat exchanger and therefore also comprises means for adjusting the temperature of the wood gases.

8. The device for cooling wood gases according to claim 7, **characterized in that** the means (24) for adjusting the amount of cooling liquid comprise a valve (24), by which the amount of liquid in the liquid channels (20) is arranged to be adjusted.

9. The device according to claim 8 for cooling wood gases, **characterized in that** the device for cooling wood gases also comprises a liquid tank (25) arranged in a flow connection with said boiling heat exchanger (18), wherein said valve (24) is arranged to control the liquid level in the liquid channels (20).

10. The device according to claim 9 for cooling wood gases, **characterized in that** the valve (24) is arranged to increase the flow of cooling liquid from the liquid tank (25) to the boiling heat exchanger (18) for increasing the cooling capacity, and that the valve (24) is arranged to decrease the flow of cooling liquid from the liquid tank (25) to the boiling heat exchanger (18) for decreasing the cooling capacity.

11. The device for cooling wood gases according to any of the claims 7 to 10, **characterized in that** the device for cooling wood gases further comprises a condenser (27), to which the cooling liquid evaporated in the boiling heat exchanger (18) is arranged to be led for converting the evaporated cooling liquid to the liquid state.

12. The device for cooling wood gases according to claim 11, **characterized in that** the condenser (27) further comprises means (28, 29) for supplying heating liquid to the condenser (27), wherein the heating liquid is arranged to be heated by the thermal energy contained in the evaporated cooling liquid.

13. A wood gas generator comprising a gasifier (3) for forming wood gases by combustion of wood material, , and a combustion engine (10) in which wood gases are arranged to be used as a power source of the combustion engine, **characterized in that** the wood gas generator further comprises a device according to claim 7.

14. The wood gas generator according to claim 13, **characterized in that** it further comprises a generator (12) that said combustion engine (3) is arranged to rotate for generating electrical energy in the generator (12).

## Patentansprüche

1. Verfahren zum Kühlen von Holzgasen, wobei Holzgase durch Verbrennen von Holzmaterial in einem Vergaser (3) entstehen und die Holzgase in einem Kühler (8) gekühlt werden, **gekennzeichnet durch**:
- Verwenden eines Verdampfungswärmetauschers (18) als den Kühler (8),
- Kühlen der Holzgase in dem Verdampfungswärmetauscher (18), der mit Flüssigkeitskanälen (20) zum Kühlen von Flüssigkeit versehen ist,
- Einstellen des Betrages an Kühlflüssigkeit in den Flüssigkeitskanälen (20) des Verdampfungswärmetauschers, und
- dadurch Einstellen der Temperatur der Holzgase.

2. Verfahren nach Anspruch 1, **gekennzeichnet durch** Einstellen des Betrages an Kühlflüssigkeit in den Flüssigkeitskanälen (20) durch Ändern des Kühlflüssigkeitsstandes.

3. Verfahren nach Anspruch 2, **gekennzeichnet durch** Erhöhen der Kühlkapazität des Kühlers (8) durch Anheben des Kühlflüssigkeitsstandes in den Flüssigkeitskanälen (20) und durch Verringern der Kühlkapazität durch Absenken des Kühlflüssigkeitsstandes in den Flüssigkeitskanälen (20).

4. Verfahren nach Anspruch 1, 2 oder 3, **gekennzeichnet durch** Verdampfen der Kühlflüssigkeit in den Flüssigkeitskanälen (20) des Verdampfungswärmetauschers (18) und Leiten der verdampften Flüssigkeit in einen Kondensator (27) zum Umwandeln der verdampften Kühlflüssigkeit in den flüssigen Zustand.

5. Verfahren nach Anspruch 4, **dadurch gekennzeichnet, dass** auch Erwärmungsflüssigkeit in den Kondensator (27) transportiert wird, wobei in der verdampften Kühlflüssigkeit enthaltene Wärmeenergie zu der Erwärmungsflüssigkeit übertragen wird.

6. Verfahren nach Anspruch 5, **gekennzeichnet durch** Verwenden der Erwärmungsflüssigkeit zum Heizen eines oder mehrerer Gebäude (15).

7. Vorrichtung zum Kühlen von Holzgasen, die einen Kühler (8) umfasst, der dafür ausgebildet ist, dass Holzgase, die durch Verbrennen von Holzmaterial in einem Vergaser entstehen, in ihn eingeleitet werden, um die Holzgase zu kühlen, **dadurch gekennzeichnet, dass** der Kühler (8) einen Verdampfungswärmetauscher (18) mit Flüssigkeitskanälen (20) zum Kühlen von Flüssigkeit umfasst und dass die Vorrichtung zum Kühlen von Holzgasen außerdem ein Mittel (24) zum Einstellen des Betrages an Kühlflüssigkeit in den Flüssigkeitskanälen (20) des Verdampfungswärmetauschers umfasst und daher auch Mittel zum Einstellen der Temperatur der Holzgase umfasst.

8. Vorrichtung zum Kühlen von Holzgasen nach Anspruch 7, **dadurch gekennzeichnet, dass** die Mittel (24) zum Einstellen des Betrages an Kühlflüssigkeit ein Ventil (24) umfassen, das dafür vorgesehen ist, den Betrag an Flüssigkeit in den Flüssigkeitskanälen (20) einzustellen.

9. Vorrichtung nach Anspruch 8 zum Kühlen von Holzgasen, **dadurch gekennzeichnet, dass** die Vorrichtung zum Kühlen von Holzgasen außerdem einen Flüssigkeitstank (25) umfasst, der in einer Strömungsverbindung mit dem Verdampfungswärmetauscher (18) angeordnet ist, wobei das Ventil (24) dafür ausgelegt ist, den Flüssigkeitsstand in den Flüssigkeitskanälen (20) zu steuern.

10. Vorrichtung nach Anspruch 9 zum Kühlen von Holzgasen, **dadurch gekennzeichnet, dass** das Ventil (24) dafür ausgelegt ist, das Strömen von Kühlflüssigkeit von dem Flüssigkeitstank (25) zu dem Verdampfungswärmetauscher (18) zu erhöhen, um die Kühlkapazität zu steigern, und dass das Ventil (24) dafür ausgelegt ist, das Strömen von Kühlflüssigkeit von dem Flüssigkeitstank (25) zu dem Verdampfungswärmetauscher (18) zu verringern, um die Kühlkapazität zu reduzieren.

11. Vorrichtung zum Kühlen von Holzgasen nach einem der Ansprüche 7 bis 10, **dadurch gekennzeichnet, dass** die Vorrichtung zum Kühlen von Holzgasen des Weiteren einen Kondensator (27) umfasst, der dafür ausgelegt ist, dass die in dem Verdampfungswärmetauscher (18) verdampfte Kühlflüssigkeit zu ihm geleitet wird, um die verdampfte Kühlflüssigkeit in den flüssigen Zustand umzuwandeln.

12. Vorrichtung zum Kühlen von Holzgasen nach Anspruch 11, **dadurch gekennzeichnet, dass** der Kondensator (27) des Weiteren Mittel (28, 29) zum Zuführen von Erwärmungsflüssigkeit zu dem Kondensator (27) umfasst, wobei die Erwärmungsflüssigkeit dafür ausgelegt ist, durch die in der verdampften Kühlflüssigkeit enthaltene Wärmeenergie erwärmt zu werden.

13. Holzgasgenerator, der einen Vergaser (3) zum Bilden von Holzgasen durch Verbrennen von Holzmaterial und einen Verbrennungsmotor (10) umfasst, der dafür ausgelegt ist, die Holzgase als eine Energiequelle des Verbrennungsmotors zu nutzen, **dadurch gekennzeichnet, dass** der Holzgasgenerator des Weiteren eine Vorrichtung nach Anspruch 7 umfasst.

14. Holzgasgenerator nach Anspruch 13, **dadurch gekennzeichnet, dass** er des Weiteren einen Generator (12) umfasst, wobei der Verbrennungsmotor (3) dafür ausgelegt ist, den Generator (12) zu drehen, damit der Generator (12) elektrische Energie erzeugen kann.

## Revendications

1. Procédé permettant de refroidir des gaz de bois, dans lequel des gaz de bois sont formés par combustion d'un matériau à base de bois dans un gazéifieur (3), et les gaz de bois sont refroidis dans un refroidisseur (8), **caractérisé par** les étapes consistant à
- utiliser un échangeur de chaleur par ébullition (18) comme refroidisseur (8),
- refroidir les gaz de bois dans l'échangeur de chaleur par ébullition (18) qui est équipé de canaux de liquide (20) permettant de refroidir du liquide,
- ajuster la quantité de liquide de refroidissement dans les canaux de liquide (20) de l'échangeur de chaleur par ébullition, et
- ajuster ainsi la température des gaz de bois.

2. Procédé selon la revendication 1, **caractérisé par** l'étape consistant à ajuster la quantité de liquide de refroidissement dans les canaux de liquide (20) grâce à une étape consistant à modifier le niveau de liquide de refroidissement.

3. Procédé selon la revendication 2, **caractérisé par** les étapes consistant à augmenter la capacité de refroidissement du dispositif de refroidissement (8) grâce à une étape consistant à augmenter le niveau de liquide de refroidissement dans les canaux de liquide (20), et à réduire la capacité de refroidissement grâce à une étape consistant à abaisser le niveau de liquide de refroidissement dans les canaux de liquide (20).

4. Procédé selon la revendication 1, 2 ou 3, **caractérisé par** les étapes consistant à faire s'évaporer le liquide de refroidissement dans les canaux de liquide (20) de l'échangeur de chaleur par ébullition (18), et à acheminer le liquide évaporé jusque dans un condenseur (27) afin de convertir le liquide de refroidissement évaporé vers l'état liquide.

5. Procédé selon la revendication 4, **caractérisé par** l'étape consistant à transporter également du liquide de chauffage jusque dans le condenseur (27), de l'énergie thermique contenue dans le liquide de refroidissement évaporé étant transférée vers le liquide de chauffage.

6. Procédé selon la revendication 5, **caractérisé par** l'étape consistant à utiliser le liquide de chauffage pour chauffer un ou plusieurs bâtiment(s) (15).

7. Dispositif permettant de refroidir des gaz de bois, comprenant un refroidisseur (8) vers lequel il est prévu d'acheminer des gaz de bois formés par combustion d'un matériau à base de bois dans un gazéifieur en vue du refroidissement desdits gaz de bois, **caractérisé en ce que** le refroidisseur (8) comprend un échangeur de chaleur par ébullition (18) avec des canaux de liquide (20) destinés à refroidir du liquide de refroidissement, et le dispositif permettant de refroidir des gaz de bois comprend également un moyen (24) permettant d'ajuster la quantité de liquide de refroidissement au sein des canaux de liquide (20) de l'échangeur de chaleur par ébullition et comprend par conséquent également un moyen permettant d'ajuster la température des gaz de bois.

8. Dispositif permettant de refroidir des gaz de bois selon la revendication 7, **caractérisé en ce que** le moyen (24) permettant d'ajuster la quantité de liquide de refroidissement comprend une vanne (24), grâce à laquelle il est prévu d'ajuster la quantité de liquide au sein des canaux de liquide (20).

9. Dispositif selon la revendication 8, permettant de refroidir des gaz de bois, **caractérisé en ce que** ledit dispositif permettant de refroidir des gaz de bois comprend également un réservoir de liquide (25) agencé en liaison fluidique avec ledit échangeur de chaleur par ébullition (18), ladite vanne (24) étant conçue pour commander le niveau de liquide au sein des canaux de liquide (20).

10. Dispositif selon la revendication 9, permettant de refroidir des gaz de bois, **caractérisé en ce que** la vanne (24) est conçue pour augmenter la circulation de liquide de refroidissement du réservoir de liquide (25) vers l'échangeur de chaleur par ébullition (18) afin d'augmenter la capacité de refroidissement, et a vanne (24) est conçue pour diminuer la circulation de liquide de refroidissement du réservoir de liquide (25) vers l'échangeur de chaleur par ébullition (18) afin de diminuer la capacité de refroidissement.

11. Dispositif permettant de refroidir des gaz de bois selon l'une quelconque des revendications 7 à 10, **caractérisé en ce que** ledit dispositif permettant de refroidir des gaz de bois comprend en outre un condenseur (27) vers lequel il est prévu d'acheminer le liquide de refroidissement évaporé dans l'échangeur de chaleur par ébullition (18) afin de convertir le liquide de refroidissement évaporé vers l'état liquide.

12. Dispositif permettant de refroidir des gaz de bois selon la revendication 11, **caractérisé en ce que** le condenseur (27) comprend en outre un moyen (28, 29) permettant d'alimenter du liquide de chauffage vers le condenseur (27), le liquide de chauffage étant destiné à être chauffé grâce à l'énergie thermique contenue dans le liquide de refroidissement évaporé.

13. Générateur de gaz de bois comprenant à gazéifieur (3) permettant de former des gaz de bois par combustion d'un matériau à base de bois, et un moteur à combustion (10) au sein duquel il est prévu d'utiliser des gaz de bois comme source d'énergie du moteur à combustion, **caractérisé en ce que** le générateur de gaz de bois comprend en outre un dispositif selon la revendication 7.

14. Générateur de gaz de bois selon la revendication 13, **caractérisé en ce qu'**il comprend en outre une génératrice (12) que ledit moteur à combustion (3) est conçu pour faire tourner afin de générer de l'énergie électrique au sein de ladite génératrice (12).
